# EUROPÄISCHE PATENTSCHRIFT

(11) **EP 2 409 573 B1**
(45) Veröffentlichungstag und Bekanntmachung des Hinweises auf die Patenterteilung: **07.09.2016**
(21) Anmeldenummer: 11405284.8
(22) Anmeldetag: 15.07.2011
(51) Int. Cl.: A22C 11/12, A22C 15/00

(54) **Automatisches Verfahren zum Abbinden hülsenförmig gekrümmter Wurstwaren und nach dem Verfahren hergestellte hülsenförmig gekrümmte Wurstwaren**
Automatic method for tying off curved sausage goods in the form of a casing and curved sausage goods in the form of casing produced according to the method
Procédé automatique de détachement de saucisses tubulaires incurvées et saucisses tubulaires incurvées fabriquées selon le procédé

(30) Priorität: 20.07.2010 CH 11822010
(43) Veröffentlichungstag der Anmeldung: 25.01.2012
(73) Patentinhaber: Pedroia, Luigi, 6648 Minusio (CH); Pedroia, Stefano, 6648 Minusio (CH)
(72) Erfinder: Pedroia, Luigi, 6648 Minusio (CH); Pedroia, Stefano, 6648 Minusio (CH)
(74) Vertreter: Biazzi, Riccardo

(56) Entgegenhaltungen:
- EP-A1- 0 048 507
- EP-A1- 1 844 659

## Beschreibung

Die vorliegende Erfindung betrifft ein automatisches Verfahren zum Abbinden von Wurstwaren gemäss dem Oberbegriff des Anspruchs 1 und eine Wurstware, die unter Anwendung des erfindungsgemässen Verfahrens gemäss dem Oberbegriff des Anspruchs 4 hergestellt wurde.

Vgl. die Druckschrift EP-A-0048507.

Vorab sei hier festgestellt, dass unter dem Begriff "automatisches Verfahren" hier eine mechanisierte Arbeitsweise zu verstehen ist, die mittels einer geeigneten Abbindemaschine durchgeführt wird, welche das Abbinden mechanisch ausführt, und sich damit von den manuellen Wurst-Abbindesystemen oder dem von Hand ohne jedes mechanische Hilfsmittel ausgeführten Abbinden unterscheidet. Das Abbinden von Wurstwaren von Hand, beispielsweise mit dem Anlegen von Knoten, ist bekannt und brauchbar, und wird auch heute noch breit und in grossem Umfang angewendet. Das Abbinden von Hand ist jedoch langsam und teuer und eignet sich schlecht für die industrielle Herstellung von Wurstwaren. Ein Verfahren zum automatischen Abbinden erfordert definitionsgemäss, mindestens für die eigentliche Operation des Abbindens - die darin besteht, dass zwischen zwei aufeinanderfolgenden Würsten eine Abschneidezone zwischen zwei Verjüngungszonen der Wursthaut oder Darms gebildet wird, wo die beiden kontinuierlich hergestellten Würste voneinander getrennt werden können - ein mechanisches Abbindeorgan, wobei das Abbinden auf verschiedene Arten erfolgen kann, wie beispielsweise mittels eines eigentlichen Knotens oder mittels Umwinden mit einer Reihe von Windungen um die Wursthaut bzw. den Darm herum, usw.

Die vorliegende Erfindung hingegen ist ausgelegt für das Abbinden einer speziellen Art von Würsten, nämlich für die sogenannten "hufeisenförmigen", die sich von den "geraden" (Salsiz, Salami) darin unterscheidet, dass sie in ihrer Handelsform, einen bestimmtes Aussehen, nämlich die "Hufeisenform" zeigt, bei der sich die beiden Enden der Wurst nahe beieinander befinden oder in vielen Fällen einander berühren und so eine mehr oder weniger kreisförmige Wurst bilden.

Diese Wurstart wird als regionale Spezialität insbesondere in bestimmten Regionen von Süditalien und in Spanien hergestellt. Zur Herstellung dieser speziellen Wurstart ist, ausser der Verwendung von "vorgeformtem" Darm, d.h. einem Wurstdarm, der eine natürliche Tendenz aufweist, sich zu krümmen, erforderlich, dass nach dem Abbinden und dem Abtrennen der Abbindepunkte der Wurst eine zusätzliche Operation ausgeführt wird, die darin besteht, dass die Wurst an einer Stange mittels einer Schnur aufgehängt wird, welche auch die Abbindeschnur sein kann, sofern die Abbindung genügend stark ist, so dass sich das Produkt nicht ausfädeln kann.

Die verwendete Abschnürungsmethode spielt daher eine sehr wichtige Rolle für gutes Gelingen der Operation gut, weil die Schnur während der ganzen Zeit der Reifung oder Lagerung der Wurst eine beträchtliche Zugkraft aushalten muss. Daher seien hier die bekannten und für diesen Zweck anwendbaren Abbindearten dargelegt.

Wie bereits erwähnt ist das manuelle Abbinden seit jeher bekannt und heute noch in "handwerklichem" Mass verwendet, bei dem ein richtiger enger und solider Knoten um den Wurstdarm so gebildet wird, dass ein sicheres Abhängen der Wurst gewährleistet ist. Der einzige Nachteil dieses Systems, schwerwiegend allerdings unter dem Aspekt der Produktivität, besteht in den hohen Kosten für diese Operation, deren Anwendung deshalb in der Grosserien-Wurstproduktion praktisch ausgeschlossen ist.

Tatsächlich existiert auf dem Markt eine mechanische Abbindevorrichtung, die echte Knoten anlegen kann, kommerzialisiert unter dem Namen Nodomatic von der Firma Luigi Pedroia, in CH 6648 Minusio. Diese Maschine weist jedoch immer noch den Nachteil kleinen Arbeitsgeschwindigkeit und grosser Kompliziertheit auf, so dass sie durch eine einfachere und vor allem schnellere Maschine ersetzt wurde, welche die Würste mit einfachem Umwinden mit Schnurwindungen um den Wurstdarm herum abbindet, welche Maschine von der gleichen Firma vertrieben wird und in Europa unter der Nummer EP-0865732 patentiert ist. Dieses System eignet sich ohne weiteres gut für gerade Würste, die nicht zur Reifung und Lagerung aufgehängt werden müssen, denn die Praxis hat gezeigt, dass diese Abbindeart nicht genügend sicherstellt, dass sie festhält, wenn die Wurst aufgehängt wird. Die Gefahr besteht, dass sich die Abbinde-Windungen von der frischen Wursthaut lösen, mit den leicht voraussehbaren Folgen.

Sodann ist ein Abbindesystem bekannt und in grossem industriellen Massstab angewendet, welches das Halten der Abbindung absolut sicherstellt und somit technisch gesehen auch für die Herstellung von "hufeisenförmigen" Würsten angewendet werden könnte. Dabei handelt es sich um das Abbinden mittels sogenannter Metall-Clips, also Klemmen, die durch Deformation um die Wursthaut verengt werden und mittels welchen somit auch eine AufhängeSchnur zwischen Wursthaut und dem Clip genau und sicher blockiert werden kann, wenn diese Schnur notwendig ist (Bei den mittels Clip abgebundenen Würsten ist nicht immer erforderlich, dass eine Schnur die beiden Enden der Wurst miteinander verbunden muss, wie jedermann weiss, der schon einmal eine Salami-Wurst gekauft hat).

Dieses Abbindesystem weist jedoch etliche grundsätzliche Nachteile auf, welche die Anwendung in der Fabrikation hochwertiger Wurstwaren, insbesondere von solchen in Hufeisenform, stark einschränken. Der Kunde, der solche Wurstwaren kauft, will keine Metall-Clips sehen, weil diese nicht mehr "handwerklich" aussehen, wie man es bei einem solchen Produkt erwartet, sondern zeigen, dass sie "maschinell" hergestellt worden sind. Dieser Aspekt ist wegen des ästhetischen Aussehens und damit kommerziell sehr wichtig. Darüber hinaus birgt die Verwendung metallischer Clips die Gefahr, dass beim Abbinden auf der Maschine oder auch nachher ein Clip in die Wurstfüllung eindringen und dann unter den Zähnen des unglücklichen Konsumenten landen könnte, was grosse Gefahr von Zahnbrüchen in sich birgt.

Aus all diesen Gründen verliert die Verwendung von Metall-Clips sehr an Interesse und man versucht daher einen Ersatz durch Methoden des Abbindens mittels Schnur oder Bindfaden wie die oben erwähnten.

Der Zweck der vorliegenden Erfindung ist daher, ein Verfahren zum Abbinden hufeisenförmig gekrümmter Wurstwaren und das entsprechendes Produkt vorzuschlagen, nämlich eine nach dem erfindungsgemässen Verfahren hergestellte Wurst, womit die oben genannten Nachteile des Standes der Technik vermieden werden können, und insbesondere eine hufeisenförmige Wurst mechanisch, also mit hoher Fabrikationsgeschwindigkeit bzw. Produktivität hergestellt werden kann, welche einen handwerklichen Aspekt bietet, also ohne Metall-Clips, und dennoch eine Reifung oder Lagerung der aufgehängten Wurst mit aller Sicherheit zu gewährleisten.

Diesen Zweck erfüllt ein Abbinde-Verfahren gemäss dem Oberbegriff des Anspruchs 1, gekennzeichnet durch die Eigenschaften gemäss dem kennzeichnenden Teil des Anspruchs 1.

Betreffend die Eigenschaften der gemäss der Erfindung hergestellten Wurst, ist diese im kennzeichnenden Teil des Anspruchs 4 beschrieben.

Der grundlegende Gedanke der vorliegenden Erfindung besteht darin, das in der Praxis und aus der EP-0865.732.B1 bekannte Abbindesystem für Würste zu übernehmen, gemäss welchem die Wurst mit einem Abbinde-Bindfaden in engen Windungen um die Wursthaut abgebunden wird, wobei jedoch dafür gesorgt wird, dass durch eine einzige Zufuhröffnung der Abbindemaschine ein zweiter Bindfaden zugeführt wird, der in der nachfolgenden Reifungs- oder Lagerungsphase als Aufhängeschnur für die Wurst dient, in solcher Weise, dass der Abbinde-Bindfaden zwischen seinen Windungen sowohl die Wursthaut als auch den Aufhänge-Bindfaden umschliesst. Die dafür erforderliche Abbindemaschine unterscheidet sich praktisch nicht von jener, die aus der EP-0865.732.B1 bekannt ist, ausser dass dafür gesorgt ist, dass der zweite Bindfaden (der auch eine Schnur mit bestimmten Eigenschaften sein kann, welche sie für diesen Zweck geeigneter machen) parallel zur Wursthaut zugeführt wird, ohne dass sie irgendeiner besonderen Umwindeoperation unterworfen wird. Sie muss lediglich zwischen der Wursthaut und den Windungen eng eingebunden werden, so dass sie sich nicht aus dem Abbindepunkt ausfädeln kann, wenn die Wurst am Aufhänge-Bindfaden an einer Stange aufgehängt wird.

Die vorliegende Erfindung ist im Folgenden unter Bezugnahme auf die Abbildungen genauer beschrieben; diese zeigen in der:
- Fig. 1: die erfindungsgemässe Wurst, wie sie aus der Abbindemaschine kommt, in einer gekrümmten Form "natürlichen" Ursprungs, die durch eine Tendenz des Wurstdarms bzw. der Wursthaut, sich zu krümmen, vorgegeben ist;
- Fig. 2: eine vergrösserte schematische Detaildarstellung des Abbindepunktes der Wurst;
- Fig. 3: die in "Hufeisenform" gekrümmte Wurst, die mittels der Aufhängeschnur an einer Stange aufgehängt ist.

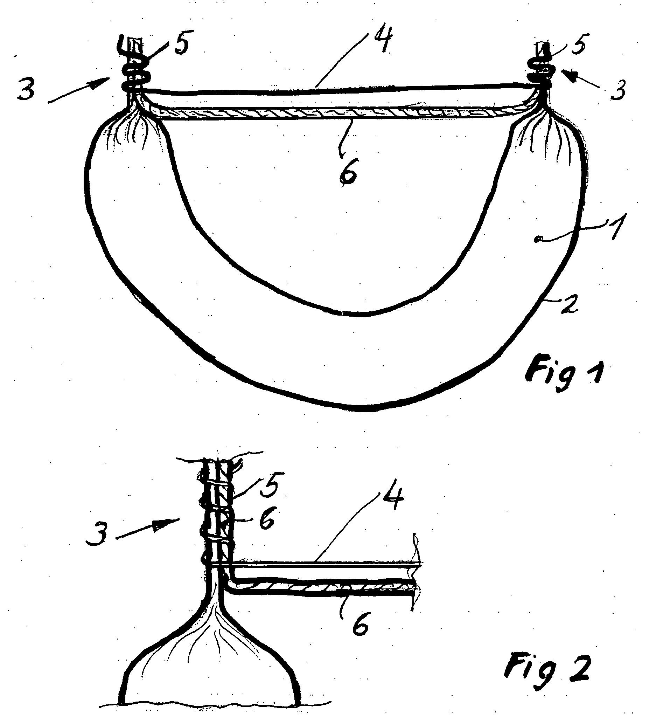

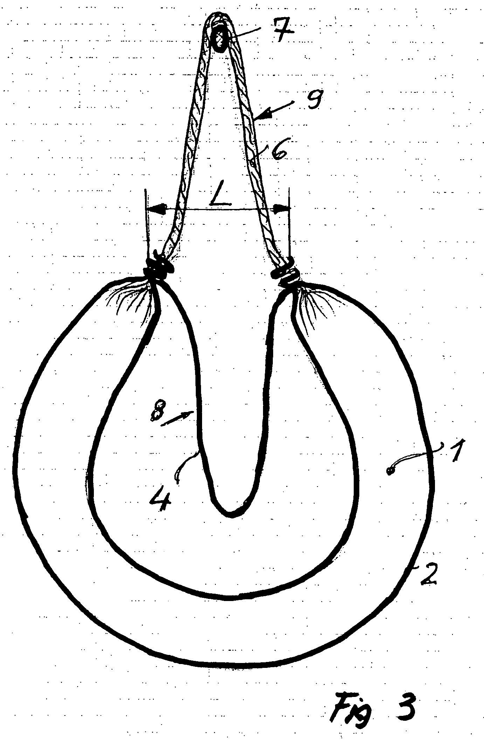

In der Fig. 1 ist die aus der Abbindemaschine austretende Wurst mit 1 bezeichnet (wobei die an sich bekannte Abbindemaschine nicht dargestellt ist). Mit 2 ist die Wursthaut bezeichnet, welche die Fleischfüllung irgendwelcher geeigneten Art umhüllt, während mit 3 der Abbindepunkt bezeichnet ist, welcher Gegenstand der vorliegenden Erfindung ist. Dieser in der Fig. 2 gezeigte Abbindepunkt 3 ist sodann in der Fig. 3 zum besseren Verständnis vergrössert und schematisch dargestellt.

Der eigentliche Abbindefaden ist mit der Bezugsziffer 4 bezeichnet, der am Abbindepunkt 3 in Windungen 5 die Wursthaut umschlingt und somit eine Abschlusszone für das Füllmaterial der Wurst 1 bildet. Das Abbinden der Wurst am Abbindepunkt 3 mittels der Windungen 5 ist an sich bekannt und bedarf keiner weiteren Erklärungen. Neu und erfinderisch ist hingegen, dass am Abbindepunkt 3 die umschlingenden Windungen des Abbindefadens 4 zwischen sich und der Wursthaut 2 einen zweiten Bindfaden, die sogenannten Aufhängeschnur 6 einklemmen, die somit eng festgehalten ist, so dass sie praktisch nicht mehr aus dem Abbindepunkt 3 ausfädelbar ist. Unter "nicht mehr ausfädelbar" ist in diesem Zusammenhang zu verstehen, dass sich die Aufhängeschnur 6 unter einer Zugkraft, die gleich oder grösser ist als die Hälfte des Gewichtes der Wurst 1, nicht ausfädeln lässt, um sie am Abbindepunkt 3 herauszuziehen, weil die Windungen 5 des Abbindefadens 4 sie auf der Wursthaut 2 in solcher Weise einklemmen, dass eine Reibung sichergestellt ist, die mindestens gleich stark ist, wie die genannte Kraft. Normalerweise wird bei Anwendung dieser Abbindeart als Aufhängeschnur 6 ein Bindfaden oder eine Schnur mit einem genügend grossen Reibungskoeffizient verwendet, der beispielsweise grösser ist als jener des Abbindefadens 4, wie dies gemäss dem Anspruch 2 vorgesehen ist, oder mit einem genügend grossen Durchmesser (beispielsweise grösser als 1.5 mm, wie im Anspruch 3 vorgesehen, damit sie in der Umwindezone, wo die Windungen 5 des Abbindefadens 4 liegen "einquetschbar" ist), damit eine viel höhere Ausziehkraft der Aufhängeschnur 6 erreicht wird, die oft ein Mehrfaches des halben Gewichtes der Wurst beträgt, so dass eine absolut sichere Verankerung der Aufhängeschnur 6 am Abbindepunkt gegen jede Gefahr des Ausfädelns aus dem Abbindepunkt 3 gewährleistet ist. Die erfindungsgemässe Lösung bietet daher den Vorteil, dass Würste 1, die vorgesehen sind, nach vorherigem Aufhängen schlussendlich die "Hufeisenform" zu bekommen, schnell hergestellt werden können (Siehe die Fig. 3 und die folgende Beschreibung), wobei keine Metall-Clips vorhanden sind, und daher vor allem, wenn als Aufhängeschnur 6 eine rustikale (raue) Schnur von betont handwerklichem Charakter verwendet wird, die auf dem Gestell bei Grossverteilern einen angenehmen Eindruck macht.

In der Fig. 3 ist gezeigt, wie die in "Hufeisenform" gekrümmte Wurst 1 aussieht, wenn sie für die Reifung bzw. Lagerung an einer Aufhängestange 7 hängt. Dabei spielt keine Rolle, wie lange und zu welchem Zweck diese Phase dauern soll, was für die Wirksamkeit der vorliegenden Erfindung keinerlei Bedeutung hat, die lediglich das Aufhängen mittels der Aufhängeschnur 6 erlauben soll, während der Abbindefaden 4, der im allgemeinen die gleiche freie Länge aufweist wie die Aufhängeschnur 6, frei zwischen den beiden Abbindepunkten 3 hängt.

Die in der Fig. 3 mit L angezeigte Länge zwischen den beiden Abbindepunkten 3 kann je nach dem herzustellenden Produkt zwischen einigen Zentimetern und Null gewählt werden, wobei sich die beiden Abbindepunkte 3 auch berühren können. Auch dies ist ganz nebensächlich, weil beim fertiggestellten (und für den Verkauf oft in einer Vakuumpackung verpackten) Produkt lediglich zählt, dass zwei textile "Natur"-Schnüre vorhanden sind.

### Liste der in den Figuren verwendeten Bezugsziffern

- 1: Wurst
- 2: Darm bzw. Wursthaut
- 3: Abbindepunkt bzw. Wurst-Ende
- 4: Abbindefaden
- 5: Windungen
- 6: Aufhängeschnur
- 7: Aufhängestange
- 8: Schlaufe des Abbindefadens
- 9: Schlaufe der Aufhängeschnur

## Patentansprüche

1. Automatisches Abbindeverfahren für "hufeisenförmig" gekrümmte Würste (1) mit einer Aufhängeschnur (6) an der Wurst für ihre Reifung oder Lagerung,
**dadurch gekennzeichnet, dass**
das Abbinden unter Verwendung von zwei Schnüren (4, 6) erfolgt, die gleichzeitig von der Abbindemaschine durch eine einzige Zufuhröffnung eingespeist werden, von denen die eine Schnur der Abbindefaden (4) ist, und die zweite die Aufhängeschnur (6) ist, wobei die Aufhängeschnur (6) am Abbindepunkt (3) direkt in engem Kontakt mit der Wursthaut (2) der Wurst (1) steht, während der Abbindefaden (4) in engen Windungen (5) so um die Wursthaut (2) geschlungen ist, dass mit ihren Windungen (5) sowohl die Wursthaut (2) als auch die Aufhängeschnur (6) festgeklemmt sind.

2. Verfahren gemäss dem Anspruch 1,
**dadurch gekennzeichnet, dass**
die Aufhängeschnur (6) eine Schnur einen Reibungskoeffizienten aufweist, der grösser ist als der Reibungskoeffizient des Abbindefadens (4).

3. Verfahren gemäss dem Anspruch 2,
**dadurch gekennzeichnet, dass**
die Aufhängeschnur (6) einen Durchmesser von mehr als 1.5 mm aufweist.

4. In "Hufeisenform" gekrümmte Wurst (1), die nach dem Verfahren gemäss den Ansprüchen 1 bis 3 hergestellt ist,
**dadurch gekennzeichnet, dass**
der Abbindepunkt (3) an jedem Ende der Wurst (1) aus einem Abbindefaden (4), der in Windungen (5) um die Wursthaut (2) und um die Aufhängeschnur (6) gelegt ist, wobei der Abbindefaden (4) und die Aufhängeschnur (6) die beiden Enden (3) der in "Hufeisenform" gekrümmten Wurst (1) verbinden.

5. Wurst gemäss dem Anspruch 4,
**dadurch gekennzeichnet, dass**
nach der Reifung oder Lagerung der Wurst (1) diese eine Form eines geschlossenen "Hufeisens" aufweist, in der sich die beiden Enden (3) praktisch berühren, während der Abbindefaden (4) und die Aufhängeschnur (6) zwei freie Schlaufen (8 bzw. 9) von im Wesentlichen gleicher Länge bilden.

## Claims

1. Automatic method for tying off curved sausages (1) in the form of a "horseshoe shape" with a suspension cord (6) on the sausage, for its maturing or storage,
**characterized in that**
the tying off takes place by using two cords (4,6), which are simultaneously fed from the tying-off machine through a single feeding opening, of which one cord is the tying-off thread (4), and the second is the suspension cord (6), wherein the suspension cord (6) at the tying-off position (3) is in direct and close contact with the sausage skin (2) of sausage (1), whereas the tying-off thread (4) is wound around the sausage skin (2) in such tight windings (5), that its windings (5) clamp both the sausage skin (2) as well as the suspension cord (6).

2. Method according to claim 1,
**characterized in that**
the suspension cord (6) is a cord with a friction coefficient, which is higher than the friction coefficient of the tying-off thread (4).

3. Method according to claim 2,
**characterized in that**
the suspension cord (6) has a diameter greater than 1,5 mm.

4. Sausage (1) curved in the form of a "horseshoe shape", which is produced with a method according to claims 1 to 3,
**characterized in that**
the tying-off position (3) is positioned at each end of sausage (1), formed by a tying-off thread (4), which is positioned in the form of windings (5) around the sausage skin (2) and around the suspension cord (6), wherein the tying-off thread (4) and the suspension cord (6) connect both ends (4) of the sausage (1) curved in the form of a "horseshoe shape",

5. Sausage according to claim 4,
**characterized in that**
after maturing or storage of sausage (1), the sausage has the shape of a closed "horseshoe", in which both ends (3) are practically contacting each other, while the tying-off thread (4) and the suspension cord (6) form two free loops (8 or 9) having essentially the same length.

## Revendications

1. Procédé automatique de liage de saucisses incurvées en forme de fer à cheval (1), comprenant une ficelle d'accrochage (6) sur la saucisse pour sa maturation ou son stockage,
**caractérisé en ce que**
le liage s'effectue en utilisant deux ficelles (4, 6) qui sont alimentées simultanément depuis la machine de liage par une ouverture d'alimentation unique, l'une des ficelles étant le fil de liage (4), et la deuxième étant la ficelle d'accrochage (6), la ficelle d'accrochage (6) étant directement en contact étroit avec la peau (2) de la saucisse (1) au niveau du point de liage (3), tandis que le fil de liage (4) étant enroulé en spires étroites (5) autour de la peau de la saucisse (2) de telle sorte que la peau (2) de la saucisse ainsi que la ficelle d'accrochage (6) soient serrées ou pincées fermement par les spires (5).

2. Procédé selon la revendication 1,
**caractérisé en ce que**
la ficelle d'accrochage (6) présente une ficelle ayant un coefficient de friction supérieur au coefficient de friction du fil de liage (4).

3. Procédé selon la revendication 2,
**caractérisé en ce que**
la ficelle d'accrochage (6) présente un diamètre supérieur à 1,5 mm.

4. Saucisse incurvée en forme de fer à cheval (1), fabriquée selon le procédé selon les revendications 1 à 3,
**caractérisée en ce que**
le point de liage (3) à chaque extrémité de la saucisse (1) à partir d'un fil de liage (4) qui est placé dans les spires (5) autour de la peau (2) de la saucisse et autour de la ficelle d'accrochage (6), le fil de liage (4) et la ficelle d'accrochage (6) reliant les deux extrémités (3) de la saucisse en forme de fer à cheval (1).

5. Saucisse selon la revendication 4,
**caractérisée en ce que**
après la maturation ou le stockage de la saucisse (1), celle-ci présente une forme en fer à cheval fermé, dans laquelle les deux extrémités (3) sont pratiquement en contact, tandis que le fil de liage (4) et la ficelle d'accrochage (6) forment deux boucles libres (8, respectivement 9) de longueur essentiellement identique.
